Europäisches Patentamt

European Patent Office

Office européen des brevets

(19)

(11) Veröffentlichungsnummer: **0 268 185 B1**

(12) **EUROPÄISCHE PATENTSCHRIFT**

(45) Veröffentlichungstag der Patentschrift: **28.08.91**

(21) Anmeldenummer: **87116543.7**

(22) Anmeldetag: **10.11.87**

(51) Int. Cl.⁵: **G01N 30/56**, G01N 30/60

(54) **Chromatographiesäule.**

(30) Priorität: **20.11.86 DE 3639692**

(43) Veröffentlichungstag der Anmeldung:
**25.05.88 Patentblatt 88/21**

(45) Bekanntmachung des Hinweises auf die
Patenterteilung:
**28.08.91 Patentblatt 91/35**

(84) Benannte Vertragsstaaten:
**BE CH DE FR GB IT LI NL SE**

(56) Entgegenhaltungen:
**DE-U- 8 516 102**

(73) Patentinhaber: **MERCK PATENT GESELL-
SCHAFT MIT BESCHRÄNKTER HAFTUNG
Frankfurter Strasse 250 Postfach 4119
W-6100 Darmstadt(DE)**

(72) Erfinder: **Sättler, Günther
Scribastrasse 15
W-6107 Reinheim 1(DE)**
Erfinder: **Hauke, Günter
Darmstädter Strasse 40
W-6109 Mühltal 2(DE)**

**Beschreibung**

Die Erfindung betrifft eine Chromatographiesäule, bestehend aus einem mit Sorbens gefüllten Metallrohr, das an beiden Enden mit Fritten- und Dichtelementen versehen ist, und wobei eine Verschraubung zum Anschluß von Kapillaren vorgesehen ist, die zumindest aus einer am Säulenrohr angebrachten Stützmutter und einer Überwurfmutter besteht.

Es sind bereits zahlreiche Säulen für die Chromatographie bekannt. Üblicherweise besitzen diese an beiden Enden ein Außengewinde oder eine Stützmutter mit einem Innen- oder Außengewinde, so daß mittels eines Gewindestopfens oder einer Überwurfmutter Kapillaranschlüsse zur Zu- und Abfuhr des Eluens angebracht werden können.

In neuerer Zeit werden auch vermehrt Säulenkartuschen angeboten, die über keine Verschraubung verfügen, sondern entweder in eine Kartuschenhalterung, wie z.B. in der DOS 29 30 962, der DOS 30 21 366 oder dem US Patent 4,283,280 beschrieben, oder in eine Säuleneinspannvorrichtung entsprechend der DOS 31 43 075 eingespannt werden.

Für den Anbieter, der seine Kunden sowohl mit Säulenkartuschen als auch mit Säulen mit Reduzierverschraubung versorgen will, bedeutet dies durch die zweigleisige Herstellung und verdoppelte Lagerhaltung eine erhebliche Kostenbelastung. Es bestand deshalb ein Bedürfnis nach Säulen die sowohl als Kartuschensäulen eingesetzt als auch mit einer Reduzierverschraubung versehen werden können.

Es wurde gefunden, daß das Problem dadurch gelöst werden kann, daß an einer Säulenkartusche eine abnehmbare Verschraubung vorgesehen ist, wodurch die Säule wahlweise als Kartusche oder als Komplettsäule benutzt werden kann.

Gegenstand der Erfindung der älteren Patentanmeldung DE-A-35 19 725 ist daher eine Chromatographiesäule, bestehend aus einem mit Sorbens gefüllten Metallrohr, das an beiden Enden mit Fritten und Dichtelementen versehen ist, und wobei eine Verschraubung zum Anschluß von Kapillaren vorgesehen ist, die zumindest aus einer am Säulenrohr angebrachten Stützmutter und einer Überwurfmutter besteht, die dadurch gekennzeichnet ist, daß die Stützmutter aus 2 Halbschalen besteht und so bei abgeschraubter Überwurfmutter vom Säulenrohr abgenommen werden kann.

Es wurde nun gefunden, daß diese Lösung weiter verbessert werden kann dadurch, daß nicht die Stützmutter geteilt ist, sondern daß zwei ab-nehmbare Bundhalbschalen vorgesehen sind, ge-gen die sich die ungeteilte Stützmutter abstützt.

Gegenstand der Erfindung ist daher eine Chromatographiesäule, bestehend aus einem mit Sorbens gefüllten Metallrohr, das an beiden Enden mit Fritten und Dichtelementen versehen ist, und wobei eine Verschraubung zum Anschluß von Kapillaren vorgesehen ist, die zumindest aus einer am Säulenrohr angebrachten Stützmutter und einer Überwurfmutter besteht nach dem Hauptpatent DE-A-35 19 725, dadurch gekennzeichnet, daß die Stützmutter gegen zwei abnehmbare Bundhalbschalen abgestützt ist und so bei abgeschraubter Überwurfmutter vom Säulenrohr abgenommen werden kann.

Die erfindungsgemäße Konstruktion hat nicht nur den Vorteil, daß künftig für jeden Säulentyp nur noch eine Version angeboten werden muß, sondern es wird darüberhinaus auch der Aufwand für die Reduzierverschraubungen erheblich vermindert. Für jeden Säulendurchmesser wird nämlich nur ein Verschraubungspaar benötigt. Beim Wechseln der Säule ist daher lediglich die Kartusche auszutauschen, während die Verschraubung weiter verwendet werden kann. Für den Anwender ergibt sich dadurch eine erhebliche Ersparnis bei den Anschaffungskosten.

In den Zeichnungen ist eine bevorzugte Aus-führungsform der erfindungsgemäßen Säule ge-zeigt. Da die Säule vorzugsweise symmetrisch aufgebaut ist, ist jeweils nur ein Ende der Säule gezeichnet.

Figur I zeigt einen Schnitt durch ein Säulenende mit angebrachter Verschraubung.

Figur II zeigt einen Schnitt durch ein Säulenende mit in die Verschraubung eingesetzter Vorsäule.

Das Säulenrohr (1) wird üblicherweise befüllt mit einem Sorbens (2) und verschlossen mit einem Frittenelement (3) und einer Dichtung (4) an den Kunden ausgeliefert und kann in dieser Form, z.B. in einer Kartuschenhalterung oder Säuleneinspannvorrichtung, zum Einsatz kommen. In der Nähe des Säulenendes ist eine ringförmige Nut (5) vorgesehen, in die eine Auskragung (6) der Bundhalbschalen (7) eingreifen kann. Das Druckstück (8), das mit einer Gewindebohrung (9) versehen ist, kann dann mit Hilfe der Überwurfmutter (10), die gegen die Stützmutter (12) verschraubt wird, dichtend gegen die Dichtung (4) gepreßt werden.

Die Kartuschensäule ist damit durch einfaches Aufschrauben weniger Teile zu einer Säule mit Reduzierverschraubung geworden. Ebenfalls sehr einfach ist es, die erfindungsgemäße Säule mit einer Vorsäule (11) zu betreiben. Werden nämlich die Bundhalbschalen (7) umgedreht, so wie in Figur II gezeigt, kann die Stützmutter (12) so weit in Richtung Säulenende verschoben werden, daß zwischen dem Säulenende und dem Druckstück (8) Platz für eine Vorsäule (11) bleibt. Die Vorsäule (11) ist an ihrem dem Druckstück (8) zugewandten Ende analog dem Ende der Säule (1) ausgeführt. Das der Säule (1) zugewandte Ende der Vorsäule (11) ist entweder analog dem der Säule zugewandten Ende des Druckstopfens (8) oder analog dem Ende der Säule (1) ausgeführt. Im ersten Fall kann die Vorsäule (11) direkt dichtend mit dem Ende der Säule (1) zusammenwirken. Im letzteren Fall wird zwischen Säule (1) und Vorsäule (11) ein Doppeldichtelement (15) eingesetzt, das symmetrisch aufgebaut ist und beidseitig Dichtflächen analog dem Druckstück (8) besitzt.

Zum Verschluß der Säule, z.B. beim Transport, kann das Druckstück (8) durch einen Blindstopfen verschlossen werden. Die erfindungsgemäße Säule kann in beliebigen Längen und Durchmessern gefertigt werden, wobei, wie bereits erwähnt, für Säulen gleichen Durchmessers jeweils nur 1 Verschraubung angeschafft werde muß. Für die Säule und die Verschraubung werden die üblichen Materialien, wie insbesondere rostfreier Stahl, verwendet. Die Dichtung (4) ist vorzugsweise aus inerten Polymeren wie z.B. PTFE gefertigt, während die Fritte (3) aus Sintermetall, Keramik oder einem Gewebe bestehen kann.

Durch die einfache Handhabung und die preiswerte Anschaffung und Vorrathaltung steht damit eine vorteilhafte neue Säule für die Chromatographie zur Verfügung.

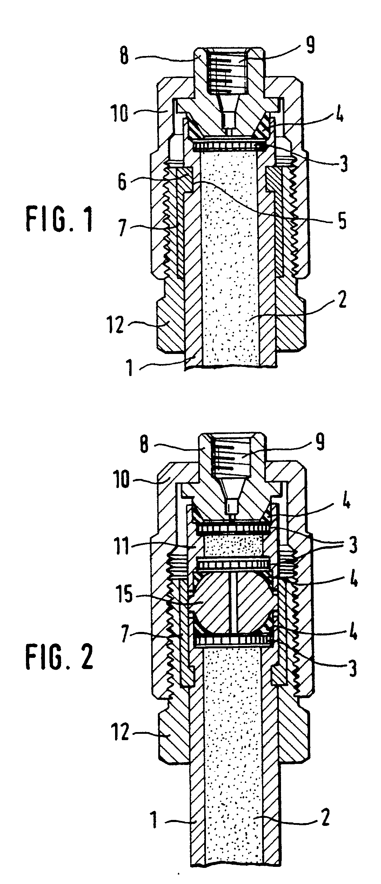

## Patentansprüche

1. Chromatographiesäule, bestehend aus einem mit Sorbens gefüllten Metallrohr, das an beiden Enden mit Fritten und Dichtelementen versehen ist, und wobei eine Verschraubung zum Anschluß von Kapillaren vorgesehen ist, die zumindest aus einer am Säulenrohr angebrachten Stützmutter und einer Überwurfmutter besteht, dadurch gekennzeichnet, daß die Stützmutter gegen zwei abnehmbare Bundhalbschalen abgestützt ist und so bei abgeschraubter Überwurfmutter vom Säulenrohr abgenommen werden kann.

2. Säule nach Anspruch 1, dadurch gekennzeichnet, daß zwischen dem Säulenrohr und der Überwurfmutter eine Vorsäule eingesetzt ist.

3. Säule nach Anspruch 2, dadurch gekennzeichnet, daß die Bundhalbschalen so bemessen sind, daß durch Umdrehen der Bundhalbschalen die Stützmutter soweit in Richtung Säulenende verschoben werden kann, daß zwischen Säulenrohr und Überwurfmutter Raum für eine Vorsäule mit Dichtelementen geschaffen wird.

## Claims

1. Chromatography column consisting of a metal tube which is filled with an adsorbent and is provided with frits and sealing elements at both ends, a screw connection for connecting capillaries which consists of at least one support nut attached to the column tube and a union nut being provided, characterised in that the support nut is supported against two removable collar half-shells and can thus be removed from the column tube when the union nut is unscrewed.

2. Column according to Claim 1, characterised in that a pre-column is inserted between the column tube and the union nut.

3. Column according to Claim 2, characterised in that the collar half-shells are allocated such that by twisting the collar half-shells the support nut is shifted in the direction of the end of the column so that space for a pre-column with sealing elements is provided between the column tube and the union nut.

## Revendications

1. Colonne chromatographique, constituée d'un tube métallique rempli de sorbant qui est muni aux deux extrémités de frittes et d'éléments d'étanchéité, un raccord vissé, constitué au moins d'un écrou de soutien monté sur le tube de colonne et d'un écrou-raccord, étant prévu pour le raccordement de tubes capillaires, caractérisée en ce que l'écrou de soutien s'appuie contre deux demi-coques de collet amovibles, et peut ainsi être déposé du tube de colonne après avoir dévissé l'écrou-raccord.

2. Colonne selon la revendication 1, caractérisée en ce qu'une colonne préalable est incorporée entre le tube de colonne et l'écrouraccord.

3. Colonne selon la revendication 2, caractérisée en ce que les demi-coques de collet sont dimensionnées de telle sorte qu'en les faisant tourner, l'écrou de soutien peut être déplacé suffisamment loin en direction de l'extrémité de la colonne pour créer, entre le tube de colonne et l'écrou-raccord, un espace pour une colonne préalable et ses éléments d'étanchéité.

FIG. 1

FIG. 2